# EUROPEAN PATENT APPLICATION

(11) **EP 4 722 453 A1**
(43) Date of publication of application: **08.04.2026**
(21) Application number: 25305979.4
(22) Date of filing: 25.06.2025
(51) Int. Cl.: E02B 17/00, B63B 75/00, B63B 77/10, B63C 1/02

(54) **RELOCATABLE QUAYS TO DEPLOY AND RECOVER FLOATING UNITS**

(30) Priority: 01.07.2024 EP 24306065
(71) Applicant: Technip Energies France, 92741 Nanterre Cedex (FR)
(72) Inventor: VERGNE, Frederick, 92741 Nanterre Cedex (FR); LUQUIAU, Eric, 92741 Nanterre Cedex (FR); ALLA, Ahmed, 92741 Nanterre Cedex (FR)
(74) Representative: Edson, Russell Gregory

(57) **Abstract**

A relocatable quay includes a deck that is relocatable in a body of water adjacent a stationary quay. The deck is positioned at the stationary quay to receive a floating unit. The relocatable quay also includes an elevator system positionable to raise and lower the deck to receive the floating unit from the stationary quay and to deploy the floating unit into the body of water.

## Description

### Technical Field

The present disclosure relates generally to deployment of offshore wind turbines, and more particularly although not necessarily exclusively, to relocatable quays used to deploy or recover an offshore floating unit into or from a body of water.

### Background

A floating unit may include a wind turbine mounted to a floating wind-turbine platform and deployed into a body of water. Upon production, wind-caused rotation of a rotor blade of the wind turbine can be used to drive a generator to produce electrical energy. The floating platform may include a column that floats in the body of water to keep the wind turbine above a water level of the body of water in a stable manner. Deployment of the floating platform, with or without a wind turbine already assembled, from a stationary quay into the body of water may be difficult due to the size and weight of the floating platform and a lack of infrastructure at the stationary quay to handle deployment of the floating platform into the body of water. Thus, launching the floating platform from the stationary quay may involve building permanent, tailormade equipment into the stationary quay or loading the floating platform onto an expensive submersible barge for deployment. Avoiding such difficulties in deploying the floating wind-turbine platform is desirable to limit costs associated with the permanent, tailormade deployment solutions or prohibitively expensive use of the submersible barges.

### Summary

According to aspects of the present disclosure, a relocatable quay, a method, and a system for deploying a floating wind-turbine platform, are provided according to one or more of the following examples. As used below, any reference to a series of examples is to be understood as a reference to each of those examples disjunctively (e.g., "Examples 1-4" is to be understood as "Examples 1, 2, 3, or 4"). Various aspects of the present disclosure provide systems and methods for deploying and recovering floating units according to one or more of the following examples:

Example 1 is a relocatable quay comprising: a deck relocatable in a body of water adjacent a stationary quay to receive a floating unit from the stationary quay; and an elevator system positionable to raise and lower the deck to receive the floating unit from the stationary quay and to deploy the floating unit into the body of water.

Example 2 is the relocatable quay of example 1, wherein the floating unit comprises one or more floating columns of a floating wind turbine.

Example 3 is the relocatable quay of example(s) 1-2, wherein the elevator system is further positionable to raise and lower the deck to receive the floating unit from the body of water and to deploy the floating unit onto the stationary quay.

Example 4 is the relocatable quay of example(s) 1-3, wherein the elevator system further comprises: an elevator control system comprising: a stationary quay detector positionable to detect an elevation of a surface of the stationary quay; a water level detector positionable to detect a water level of a water surface of the body of water; and a controller positionable to control raising or lowering the deck using the elevation of the surface of the stationary quay and the water level of the water surface of the body of water.

Example 5 is the relocatable quay of example 4, wherein the elevator system further comprises: at least one ballast compartment positionable to intake water from the body of water to lower the deck and to eject water into the body of water to raise the deck, wherein the controller controls the intake of the water and the ejection of the water at the at least one ballast compartment.

Example 6 is the relocatable quay of example 4, wherein the elevator system further comprises: a jack-up system positionable to raise and lower the deck, wherein the controller controls the jack-up system to raise and lower the deck.

Example 7 is the relocatable quay of example(s) 1-6, wherein the elevator system further comprises: at least one ballast compartment positionable to intake water from the body of water to lower the deck and to eject water into the body of water to raise the deck.

Example 8 is the relocatable quay of example(s) 1-7, wherein the elevator system further comprises: a jack-up system positionable to raise and lower the deck, wherein a base of the jack-up system is deployable to engage a floor of the body of water when positioned at the stationary quay.

Example 9 is the relocatable quay of example(s) 1-8, further comprising: towing equipment positionable to engage a towline such that the relocatable quay is movable to an additional location of the stationary quay.

Example 10 is the relocatable quay of example(s) 1-9, further comprising: a set of skid beams or rails positionable on the deck to communicate with a corresponding set of skid beams or rails of the stationary quay to receive the floating unit at the deck.

Example 11 is the relocatable quay of example(s) 1-10, wherein the elevator system is positionable to lower the deck to a position within the body of water to generate separation between the deck and the floating unit.

Example 12 is a method comprising: deploying a relocatable quay through a body of water to a stationary quay; positioning a deck of the relocatable quay at an elevation of a surface of the stationary quay; receiving a floating unit at the deck of the relocatable quay from the stationary quay; and lowering at least a portion of the relocatable quay, the floating unit, or both into the body of water to generate separation between the floating unit and the deck of the relocatable quay.

Example 13 is the method of example 12, wherein lowering the relocatable quay comprises: filling at least one ballast compartment of the relocatable quay with water from the body of water to lower the deck into the body of water.

Example 14 is the method of example(s) 12-13, wherein lowering the relocatable quay comprises: lowering a jack-up system to lower the deck into the body of water.

Example 15 is the method of example(s) 12-14, wherein positioning the deck of the relocatable quay at the elevation of the surface of the stationary quay comprises: detecting the elevation of the surface of the stationary quay with a stationary quay detector; and raising or lowering the deck of the relocatable quay to the elevation of the surface of the stationary quay.

Example 16 is the method of example(s) 12-15, wherein lowering the relocatable quay into the body of water to generate separation between the floating unit and the deck of the relocatable quay comprises: detecting a water level of a water surface of the body of water with a water level detector; and lowering the deck of the relocatable quay to a position sufficiently below the water level of the water surface of the body of water to generate the separation between the floating unit and the deck of the relocatable quay.

Example 17 is a system comprising: a deck movably positionable in a body of water adjacent a stationary quay to receive a floating unit; an elevator system positionable to raise and lower the deck to receive the floating unit and to deploy the floating unit into the body of water; and a controller communicatively coupled to the elevator system, the controller positionable to control the elevator system to raise or lower the deck to receive the floating unit and to lower the deck to deploy the floating unit.

Example 18 is the system of example 17, wherein the elevator system comprises: at least one ballast compartment positionable to intake water from the body of water to lower the deck and to eject water into the body of water to raise the deck, wherein the controller controls the intake of the water and the ejection of the water at the at least one ballast compartment.

Example 19 is the system of example(s) 17-18, wherein the elevator system comprises: a jack-up system positionable to raise and lower the deck, wherein the controller controls the jack-up system to raise and lower the deck, and wherein a base of the jack-up system is deployable to engage a floor of the body of water when the deck is positioned at the stationary quay.

Example 20 is the system of example 19, wherein the jack-up system raises and lowers the deck using winches, strand jacks, an elevator table, or a combination thereof.

Example 21 is system comprising: a relocatable quay according to any one of Examples 1 to 11; and a controller communicatively coupled to the elevator system, the controller positionable to control the elevator system to raise or lower the deck to receive the floating unit and to lower the deck to deploy the floating unit; optionally, wherein the elevator system comprises: at least one ballast compartment positionable to intake water from the body of water to lower the deck and to eject water into the body of water to raise the deck, wherein the controller controls the intake of the water and the ejection of the water at the at least one ballast compartment.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The foregoing, together with other features and examples, will become more apparent upon referring to the following specification, claims, and accompanying drawings.

### Brief Description of the Drawings

FIG. 1 is a schematic representation of a floating wind turbine according to one example of the present disclosure.
FIGS. 2A and 2B are schematic, side views of an example of a relocatable quay used to deploy a floating wind turbine platform according to one example of the present disclosure.
FIG. 3 is a schematic, side view of an additional example of a relocatable quay used to deploy a floating wind turbine platform according to one example of the present disclosure.
FIG. 4 is a schematic, overhead view of an example of a deck of the relocatable quay of FIGS. 2A, 2B, and 3 according to one example of the present disclosure.
FIGS. 5A and 5B are schematic, side views of an additional example of a relocatable quay used to deploy a floating wind turbine platform according to one example of the present disclosure.
FIG. 6 is a schematic, overhead view of the relocatable quay of FIGS. 5A and 5B according to one example of the present disclosure.
FIG. 7 is a schematic, side view of an additional example of a relocatable quay used to deploy a floating wind turbine platform according to one example of the present disclosure.
FIG. 8 is a flowchart of a process for deploying or recovering a floating unit using a relocatable quay according to one example of the present disclosure.

### Detailed Description

Certain aspects and examples of the present disclosure relate to deployment of offshore wind turbines and to relocatable quays used to deploy an offshore floating wind turbine platform of the offshore wind turbines. A wind turbine can be mounted to the floating wind turbine platform before or after a launching operation of the floating wind turbine platform to create a floating wind turbine. The wind turbine can include a generator and a rotor blade mounted atop a tower that extends upward from the floating wind turbine platform. Floating wind turbines may be installed at different locations in various bodies of water, including but not limited to, offshore ocean locations. As used herein, the term quay may refer to a deck positioned alongside or in a body of water to enable deployment of components into the body of water. A stationary quay may be existing infrastructure located at the body of water, such as in a shipyard. The floating wind turbine platform may be deployed from the stationary quay at the edge of a body of water near a location where the floating wind turbine platform is assembled, such as in the shipyard. A relocatable quay is a quay which may be movable to an additional location within the body of water, in particular, the relocatable quay may be movable to an additional location of a stationary quay. A relocatable quay may be relocated to a location within the body of water along a portion of the stationary quay near the floating wind turbine platform. The relocatable quai may be moved vertically, i.e. raised or lowered further into the water, for example by an elevator system, and may also be moved laterally or longitudinally between a first lateral and/or longitudinal position in a body of water and a second or further lateral and/or longitudinal position(s) in a body of water. Such possibilities for moving the relocatable quay allow it to be positioned for example, near an additional location of a stationary quay, or a further stationary quay, and/or positioned correctly or appropriately in relation to, for example, the stationary quay. In addition, the relocatable quay may be positioned to receive or deploy a floating wind turbine platform while being in the correct location and correctly positioned in the body of water. The relocatable quay may receive the floating wind turbine platform from the stationary quay, and a deck or other portion of the relocatable quay may be lowered into the body of water to deploy the floating wind turbine platform.

Examples of a floating wind turbine platform can include a plurality of spaced apart semisubmersible columns that are arranged in a desired pattern. For example, the columns of a floating wind turbine platform may be arranged in a polygonal pattern, with one column of the plurality of columns located at each vertex of the polygon. In one particular example of such an arrangement, the floating wind turbine platform may have a triangular shape, with one column of three total columns located at each vertex of the triangle. A wind turbine tower may be attached to and extend upward from a top of one of the columns or elsewhere between the columns along a truss beam structure that joins the wind turbine tower to the columns.

The relocatable quay may be relocated to receive and deploy one or more floating wind turbine platforms assembled at a stationary quay. In some examples, the relocatable quay may be deployed to a location near the floating wind turbine platform upon completion of the assembly of the floating wind turbine platform. The relocatable quay may be redeployed to different locations alongside the stationary quay, or to other stationary quays at additional locations, to aid in launching additional floating wind turbine platforms.

In some examples, the relocatable quay may include an elevator system that is able to raise and lower the deck of the relocatable quay. The elevator system may include a jack-up system that raises and lowers the deck. In an example, one or more spuds at a base of the jack-up system may engage a floor or seabed of the body of water when positioned at the stationary quay. In additional examples, the elevator system may include one or more ballast compartments positionable to intake water from the body of water to lower the deck of the relocatable quay and to eject water into the body of water to raise the deck of the relocatable quay. By raising and lowering the deck of the relocatable quay, the deck of the relocatable quay may be positioned at an elevation that is even with the elevation of the stationary quay to enable receiving the floating wind turbine platform from the stationary quay through horizontal transfer from the stationary quay to the relocatable quay using external installations such as a strand jack, winches, self-propelled modular transporter (SPMT) systems, a push-pull unit, or any other external installations. Further, the deck may be lowered into the body of water in a manner that enables separation between the columns of the floating wind turbine platform and the deck of the relocatable quay such that the floating wind turbine platform floats and can be launched into the body of water.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

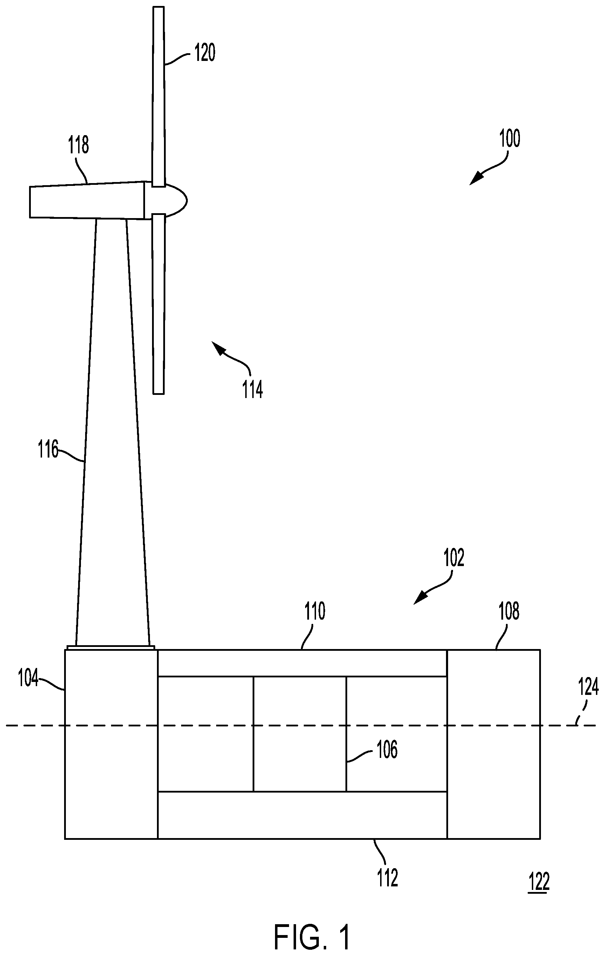

FIG. 1 is a schematic representation of a floating wind turbine 100. As shown, the floating wind turbine 100 includes a floating wind turbine platform 102. In this example, the floating wind turbine platform 102 includes three spaced apart semisubmersible columns 104, 106, 108. The columns 104, 106, 108 are respectively arranged at three points of a triangle. A different number of columns and other arrangements of the columns are possible in other examples. The columns 104, 106, 108 are interconnected by upper connecting members 110, such as deck beams, and lower connecting members 112, such as pontoons. The upper connecting members 110 and the lower connecting members 112 may be assembled with the columns 104, 106, 108 on a stationary quay prior to deployment into a body of water 122. A wind turbine 114 may be affixed to the floating wind turbine platform 102, as shown. In some examples, the wind turbine 114 may be installed after the floating wind turbine platform 102 is deployed into the body of water 122. The wind turbine 114 may include an upwardly-extending tower 116, a nacelle 118 enclosing a gearbox and a generator, and a rotatable rotor blade 120. The wind turbine tower 116 may be securely affixed to the top of a first column 104 in the example of FIG. 1, but other wind turbine locations and affixation techniques relative to the floating wind turbine platform 102 are possible in additional examples.

As represented in FIG. 1, the floating wind turbine platform 102 has been deployed into the body of water 122. The surface 124 of the body of water 122 is indicated by a dashed line. The location of the surface 124 of the body of water 122 relative to the columns 104, 106, 108 may be adjusted by ballast compartments of the columns 104, 106, 108 or the lower connecting members 112 depending on water and wind conditions during operation of the floating wind turbine 100. For example, the ballast compartments may be maintained, as also represented in FIG. 1, in a manner that keeps the floating wind turbine platform 102 at a substantially level floating orientation in the body of water 122.

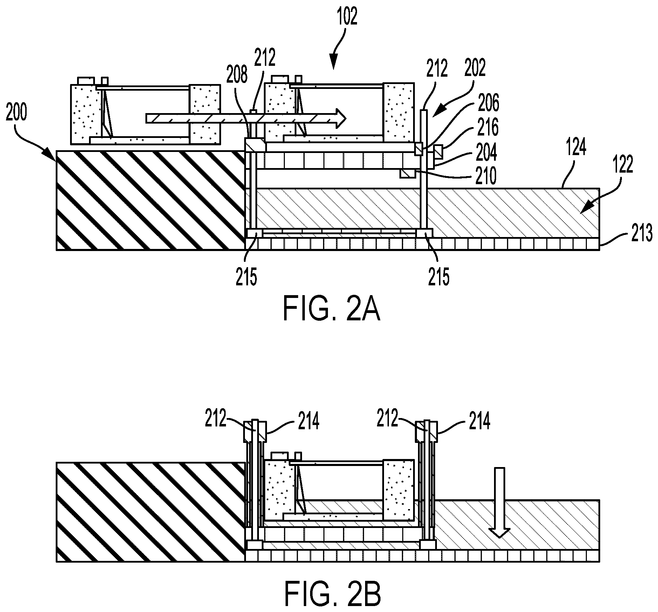

FIGS. 2A and 2B are schematic, side views of an example of a relocatable quay 202 used to deploy the floating wind turbine 100, the floating wind turbine platform 102, or any other type of floating unit according to one example of the present disclosure. While deployment of the floating wind turbine platform 102 is generally described herein, it may be appreciated that the same system or a similar system may be used to deploy or recover the completed floating wind turbine 100 or any other type of floating unit. As used herein, the term floating unit may refer to the floating wind turbine platform 102, the floating wind turbine 100, and any other floating unit that is deployable from a stationary quay 200, such as a boat or other type of watercraft.

The relocatable quay 202 of FIGS. 2A and 2B may include a deck 204 and an elevator system that raises and lowers the deck 204 relative to the stationary quay 200 to receive and deploy the floating wind turbine platform 102. In an example, the elevator system of the relocatable quay 202 includes a set of legs 212 that engage a floor or seabed 213 of the body of water 122 with foundations 215, such as spudcans. The deck 204 may be guided by the legs 212 when the deck 204 is raised or lowered. In some examples, the elevator system may include a number of legs 212 equivalent to the number of columns 104, 106, 108 of the floating wind turbine platform 102 that is launched using the relocatable quay 202. In additional examples, the elevator system may have a set number of legs 212, such as four, to support a rectangular deck 204 of the relocatable quay 202. The elevator system may be able to compensate for water level height and tide range effect.

As shown in FIG. 2A, the elevator system may further include a controller 206 that controls the elevation of the deck 204. In some examples, the elevator system may include an instrumented outrigger that is able to measure loads of the deck 204, a stationary quay detector 208 that detects a vertical distance between a surface of the stationary quay 200 and a surface of the deck 204, or a combination thereof. The stationary quay detector 208 may be a laser distance detector that is able to determine the vertical distance between the surface of the stationary quay 200 and the surface of the deck 204. Other types of detectors capable of determining the vertical distance between the surface of the stationary quay 200 and the surface of the deck 204 may also be used, such visual sensors able to monitor markings along the legs 212 to determine a height of the deck 204. The controller 206 may use the vertical distance detected by the stationary quay detector 208 to maintain the elevation of the deck 204 at an elevation level with the surface of the stationary quay 200 prior to receiving the floating wind turbine platform 102. In some examples, the elevation level of the relocatable quay may be controlled manually without the use of additional sensors.

When the deck 204 achieves an elevation corresponding to the surface of the stationary quay 200, a load-out operation of the floating wind turbine platform 102 may commence. The floating wind turbine platform 102 may be loaded out to the relocatable quay 202, as illustrated in FIG. 2A, using a sliding or skidding system. The sliding or skidding system may include rollers, water bags, air bags, self-propelled modular transporters (SPMTs), skid beams or rails, strand jacks, push-pull and skid shoes or a combination thereof.

The elevator system may also include a water level detector 210 that detects a vertical distance of the surface 124 the body of water 122 from the deck 204. The water level detector 210 may be a laser distance detector that is able to determine a vertical distance between the surface 124 of the body of water 122 and the deck 204. Other types of detectors capable of determining the vertical distance between the surface 124 of the body of water 122 and the deck 204 may also be used. The controller 206 may use the vertical distance detected by the water level detector 210 to determine a distance to lower the deck 204 to launch the floating wind turbine platform 102. Because the distance between the deck 204 and the surface 124 of the body of water 122 is known, the controller 206 is able to control the elevation of the deck 204 to launch the floating wind turbine platform 102 during both high tides and low tides. One or more of the controller 206, the stationary quay detector 208, and the water level detector 210 may be collectively referred to as an elevator control system.

For example, upon completion of the load-out operation, the elevator system may lower the floating wind turbine platform 102 into the body of water 122, as depicted in FIG. 2B. The elevator system may use a jack-up system, which may include winches 214, such as a set of strand jacks, to raise and lower the deck 204 of the relocatable quay 202. Other lifting and lowering mechanisms may also be used by the elevator system to raise and lower the deck 204 in additional examples.

Returning to FIG. 2A, upon completion of the launch of the floating wind turbine platform 102, the relocatable quay 202, which may have a positive buoyancy in the body of water 122, may disengage from the seabed 213. Once disengaged from the seabed 213, the relocatable quay 202 may couple to a towing vehicle, such as a tug, using tow lines attached to towing equipment, such as a towing bitt 216. The towing vehicle may transport the relocatable quay 202 to an additional location at the stationary quay 200 or to an additional stationary quay for use by an additional floating wind turbine platform 102.

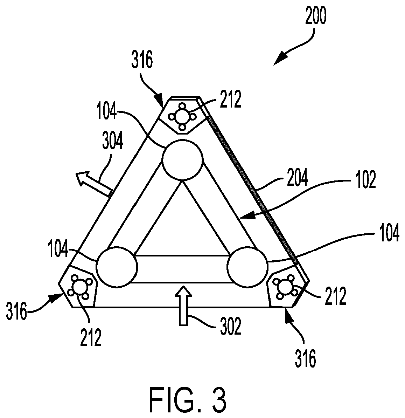

FIG. 3 is a schematic, overhead view of an example of the deck 204 of the relocatable quay 202 according to one example of the present disclosure. The deck 204 may be in a shape corresponding to a shape of the floating wind turbine platform 102. As illustrated, the floating wind turbine platform 102 includes three columns 104 arranged in a triangular shape, and the deck 204 includes a triangular shape to receive the floating wind turbine platform 102 from the stationary quay 200. In the deck 204 of the relocatable quay 202, the legs 212 may be positioned at each vertex of the deck 204. Further, jack houses 316, which may be mechanical systems that support strand jacks and enable guiding of the deck 204 on the legs 212, may have a greater distance from one another than the columns 104 of the floating wind turbine platform 102. In this manner, the floating wind turbine platform 102 may fit between the jack houses 316 during load-out of the floating wind turbine platform 102 onto the deck 204 in a direction 302 and during float-off of the floating wind turbine platform 102 off of the deck 204 in a direction 304.

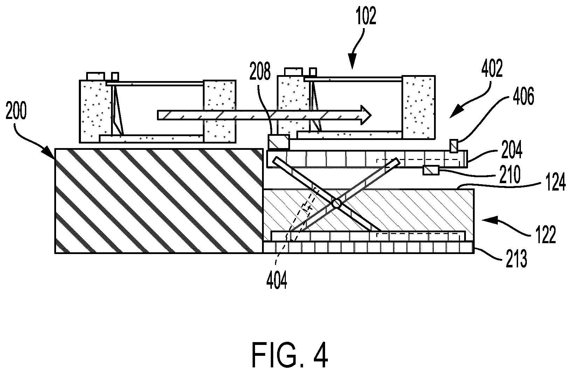

FIG. 4 is a schematic, side view of an additional example of a relocatable quay 402 used to deploy a floating wind turbine platform 102. The elevator system of the relocatable quay 402 may raise and lower the deck 204 using a hydraulically actuated elevator table 404. The elevator table 404, upon deployment at the stationary quay 200, may engage with the seabed 213 to provide a base to raise and lower the elevator table 404.

As with the relocatable quay 202, the relocatable quay 402 may include a controller 406 that controls the elevator table 404. In some examples, the elevator system may include a stationary quay detector 208 that detects a vertical distance between a surface of the stationary quay 200 and a surface of the deck 204. The controller 406 may use the vertical distance detected by the stationary quay detector 208 to maintain the elevation of the deck 204 at an elevation level with the surface of the stationary quay 200 prior to receiving the floating wind turbine platform 102.

The elevator system may also include a water level detector 210 that detects a vertical distance of the surface 124 the body of water 122 from the deck 204. The controller 406 may use the vertical distance detected by the water level detector 210 to determine a distance to lower the deck 204 to launch the floating wind turbine platform 102. Because the distance between the deck 204 and the surface 124 of the body of water 122 is known, the controller 406 is able to control the elevation of the deck 204 to launch the floating wind turbine platform 102 during both high tides and low tides.

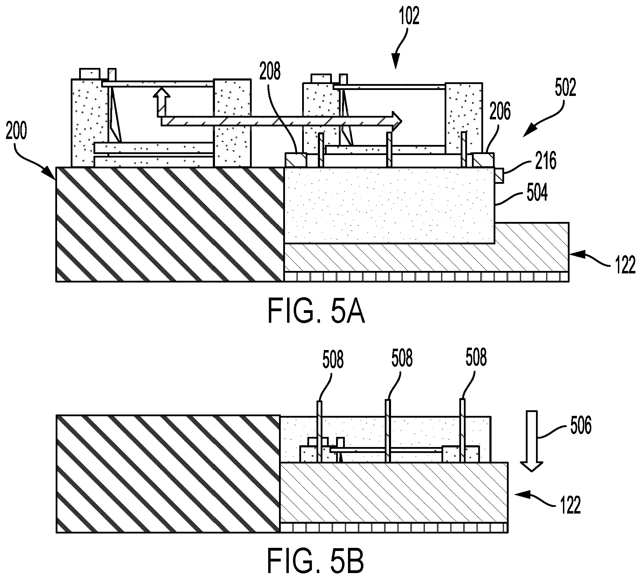

FIGS. 5A and 5B are schematic, side views of an additional example of a relocatable quay 502 used to deploy the floating wind turbine platform 102 according to one example of the present disclosure. The relocatable quay 502 of FIGS. 5A and 5B may include an elevator system that includes one or more ballast compartments 504 that raise and lower relocatable quay 502 relative to the stationary quay 200. Further, the relocatable quay 502 may be moored to the stationary quay 200 to prevent relative movement. For example, the one or more ballast compartments 504 may raise the relocatable quay 502 by ejecting water from the one or more ballast compartments 504 to the body of water 122 and lower the relocatable quay 502 by intaking water from the body of water 122 into the one or more ballast compartments 504. Raising and lowering the relocatable quay 502 may compensate for water levels and tide heights at the stationary quay 200. Further, by raising and lowering the relocatable quay 502, the relocatable quay 502 may receive the floating wind turbine platform 102 from the stationary quay 200 and deploy the floating wind turbine platform 102 into the body of water 122. In some examples, the one or more ballast compartments 504 may be used in conjunction with the relocatable quay 202 such that the deck 204 may be raised and lowered using a combination of the ballast compartments 504 and jack mechanisms. Further, in some examples, the elevator system of the relocatable quay 502 may be employed with a relocatable quay that includes some seabed foundations, such as with the relocatable quay 202. In such an example, the elevator system may raise or lower the floating wind turbine platform while the relocatable quay includes hard mounted foundations at the seabed in place of, or in addition to, the ballast compartments 504.

As shown in FIG. 5A, the elevator system may further include a controller 206 that controls the elevation of a top surface of the one or more ballast compartments 504. As with the relocatable quays 202 and 302, the elevator system may include the stationary quay detector 208 that detects a vertical distance between a surface of the stationary quay 200 and a top surface of the one or more ballast compartments 504. The controller 206 may use the vertical distance detected by the stationary quay detector 208 to maintain the elevation of the top surface of the one or more ballast compartments 504 at an elevation level with the surface of the stationary quay 200 prior to receiving the floating wind turbine platform 102.

When the top surface of the one or more ballast compartments 504 achieves an elevation corresponding to the surface of the stationary quay 200, a load-out operation of the floating wind turbine platform 102 may commence. The floating wind turbine platform 102 may be loaded-out to the relocatable quay 502, as illustrated in FIG. 5A, using a sliding system. The sliding system may include rollers, water bags, air bags, self-propelled modular transporters (SPMTs), skid beams or rails, or a combination thereof.

As shown in FIG. 5B, the elevator system of the relocatable quay 502 may further include guide supports 508 that are coupled to the one or more ballast compartments 504. The guide supports 508 may also couple to the floating wind turbine platform 102 once the floating wind turbine platform is loaded-out to the relocatable quay 502. In some examples, the elevator system may include a number of guide supports 508 equivalent to the number of columns 104, 106, 108 of the floating wind turbine platform 102 that is launched using the relocatable quay 502. In such an example, each of the guide supports 508 may be coupled to one of the columns 104, 106, 108 of the floating wind turbine platform 102. The guide supports 508 may be positioned relative to the ballast compartments 504 in such a manner to guide movement of the relocatable quay 502 as the elevator system raises or lowers the relocatable quay 502 relative to the body of water 122. As the relocatable quay 502 is raised from or lowered into the body of water 122, the ballast compartments 504 may be maintained at a level of the stationary quay 200 due to the integrated ballast of the ballast compartments 504. Further, the guide supports may be supported at the ballast compartments 504 by an SPMT, counterweights, or both positioned on the ballast compartments 504.

Upon completion of the load-out operation, the elevator system may lower the floating wind turbine platform 102 into the body of water 122, as depicted in FIG. 5B. The elevator system may use winches or a strand jack, such as the winches 214 of FIG. 2B, to lower the floating wind turbine platform 102. Other lowering mechanisms may also be used by the elevator system to lower the deck 204 in additional examples. Once the floating wind turbine platform 102 is lowered, the guide supports 508 may be remotely disconnected from the floating wind turbine platform 102 to release the floating wind turbine platform 102 into the body of water 122.

Turning back to FIG. 5A, upon completion of the launch of the floating wind turbine platform 102, the relocatable quay 502 may couple to a towing vehicle with tow lines that are attached to a towing bitt 216. The towing vehicle may include a tugboat located in the body of water 122. The towing vehicle may transport the relocatable quay 202 to an additional location at the stationary quay 200 or to an additional stationary quay for use in launching an additional floating wind turbine platform 102. The relocatable quay 502 can be manufactured in a modular manner for ease of sea or terrestrial transport, assembly, and disassembly for another location or use. In some examples, the relocatable quay 502 can also be containerized for ease of relocation.

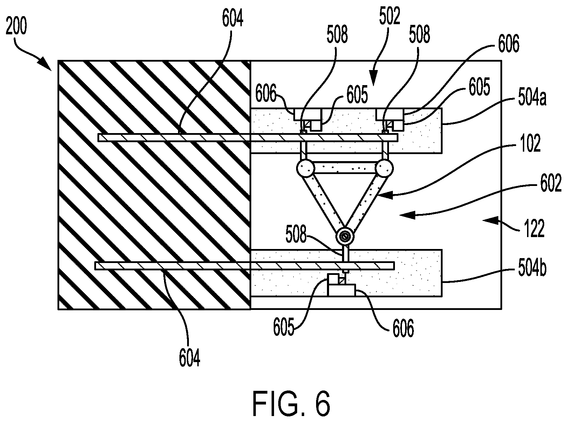

FIG. 6 is a schematic, overhead view of the relocatable quay 502 of FIGS. 5A and 5B according to one example of the present disclosure. In the illustrated example, the relocatable quay 502 includes a ballast compartment 504a and a ballast compartment 504b that are separated by the deployment region 602 into which the floating wind turbine platform 102 can be lowered and deployed into the body of water 122. In an example and as illustrated, the floating wind turbine platform 102 is arranged in a triangular shape. Each vertex of the floating wind turbine flatform 102 may be removably coupled to one of the guide supports 508. The floating wind turbine platform 102 may be lowered into the body of water 122 using winches 605, such as strand jacks.

In an example, the floating wind turbine platform 102 may travel from the stationary quay 200 to the relocatable quay 502 using a set of skid beams or rails 604. While only two skid beams or rails are depicted in FIG. 6, more or fewer rails may be used during the load out operation of the floating wind turbine platform 102. Additionally, the floating wind turbine platform 102 may be moved to the relocatable quay 502 using rollers, water bags, air bags, SPMTs, the skid beams or rails 604, or a combination thereof. Similarly, the floating wind turbine platform 102 may travel from the relocatable quay 502 to the stationary quay 200 in a similar manner when the floating wind turbine platform 102 is removed from the body of water 122. In some examples, an external counterweight 606 may be used at one or more of the guide supports to compensate for the weight of the floating wind turbine platform 102 while lifted.

While the relocatable quay 502 is shown with a pair of ballast compartments 504a and 504b, it may be appreciated that any number of ballast compartments could be used in the relocatable quay 502. For example, the relocatable quay 502 may included three or more ballast compartments.

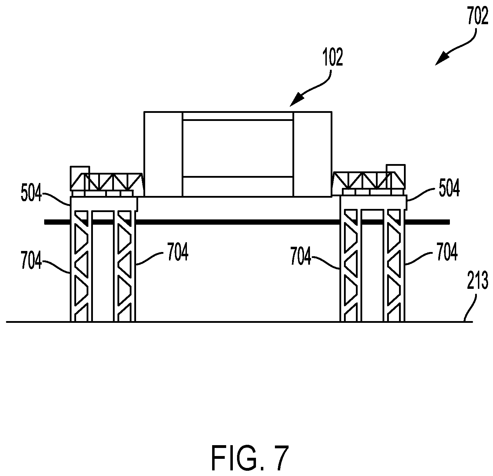

FIG. 7 is a schematic, side view of an additional example of a relocatable quay 702 used to deploy the floating wind turbine platform 102 according to one example of the present disclosure. In an example, the relocatable quay 702 may be employed with seabed foundations 704. In such an example, the elevator system may raise or lower the floating wind turbine platform 102 while the relocatable quay 702 is hard mounted at the seabed 213 using the seabed foundations 704. In some examples, the seabed foundations 704 may replace, or be in addition to, the ballast compartments 504.

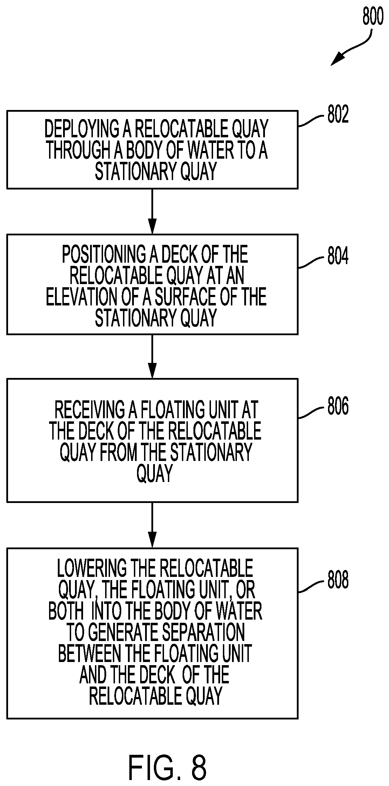

FIG. 8 is a flowchart of a process 800 used to deploy or recover a floating unit, such as the floating wind turbine platform 102, using a relocatable quay 202, 302, 502 according to one example of the present disclosure. While the process 800 is described generally for deployment of the floating unit, the process 800 may also be reversed to recover the floating wind turbine platform 102 from the body of water 122.

At block 802, the process 800 involves deploying a relocatable quay through the body of water 122 to the stationary quay 200. The relocatable quay may be towed using a tugboat or a shore based towing vehicle to position the relocatable quay at a desired location alongside the stationary quay 200. Since the relocatable quay can move from position to position, the relocatable quay may be repositioned when a floating unit is ready for deployment into the body of water 122 from the stationary quay 200.

In some examples, the relocatable quay may be aligned at an appropriate location horizontally along the stationary quay 200 and secured with mooring lines. Further, the stability and position of the relocatable quay may be established prior to proceeding with the process 800. In an example where the relocatable quay is anchored to the floor or seabed 213, such as in FIGS. 2A, 2B, and 4, the anchoring mechanisms may be deployed to engage the seabed 213. In such an example, the stability of the foundation may also be established prior to proceeding with the process 800.

At block 804, the process 800 involves positioning the deck 204 of the relocatable quay at an elevation of a surface of the stationary quay 200. In an example, the relocatable quay may include an elevator system that includes a stationary quay detector 208. The stationary quay detector 208 may detect a vertical distance between the deck 204 of the relocatable quay and the surface of the stationary quay 200. The controller 206 of the elevator system may control raising or lowering of the relocatable quay to minimize the detected vertical distance such that the floating unit is loadable from the stationary quay 200 onto the deck 204 of the relocatable quay.

At block 806, the process 800 involves receiving the floating unit at the deck 204 of the relocatable quay from the stationary quay 200. In an example, the floating unit may be moved horizontally along the stationary quay 200 toward the deck 204 of the relocatable quay. As the floating unit moves horizontally from the stationary quay 200 to the deck 204, a full load of the floating unit is transferred to the deck 204 from the stationary quay 200 in a controlled manner.

At block 808, the process 800 involves lowering at least a portion of the relocatable quay into the body of water to generate separation between the one or more columns 104 and the deck 204 of the relocatable quay during both high tides and low tides. In some examples, the elevator system of the relocatable quay may include a water level detector 210 that detects a vertical distance of the surface 124 the body of water 122 from the deck 204. The controller 206 of the elevator system may use the vertical distance detected by the water level detector 210 to determine a distance to lower the deck 204 to launch the floating wind turbine platform 102. Because the distance between the deck 204 and the surface 124 of the body of water 122 is known, the controller 206 is able to automatically control the elevation of the deck 204 to launch the floating wind turbine platform 102 during both high tides and low tides. In some examples, as with the relocatable quay 502 of FIG. 6, the relocatable quay 502 may lower only a portion of the relocatable quay into the body of water 122 to deploy the floating wind turbine platform 102. For example, the floating wind turbine platform 102 may be removably coupled to the guide supports 508, and the floating wind turbine platform 102 may be winched down the guide supports 508 into the body of water 122 while a top surface of the ballast compartments 504a and 504b are maintained at a level even with the surface of the stationary quay 200.

In some examples, where the floating unit is the floating wind turbine platform 102, the wind turbine tower 116 may be added to the floating wind turbine platform 102 upon deployment of the floating wind turbine platform into the body of water 122. In other examples, the wind turbine tower 116 may already be installed prior to receiving the floating wind turbine platform 102 at the deck 204.

In an example where the floating unit is recovered by the relocatable quay, the operations of the process 800 may be reversed. For example, the floating unit may be loaded onto a lowered portion of the relocatable quay from the body of water. The relocatable quay may raise the floating unit to an elevation even with a surface of the stationary quay. Once raised, the floating unit may be offloaded from the relocatable quay onto the stationary quay. Upon offloading the floating unit, the relocatable quay may be in a position to receive a new floating unit for deployment into the body of water, or the relocatable quay may be repositioned to a new stationary quay or to a new location at the stationary quay to restart the process 800.

The controller 206, which may be used to raise and lower the relocatable quay, may include a processor and a memory. In a non-limiting example, the memory can include instructions that are executable by the processor for causing the processor to perform operations that raise and lower the relocatable quay or a portion of the relocatable quay within the body of water 122. Initiation of such operations may, in some non-limiting examples, be based on signals from the stationary quay detector 208 and the water level detector 210, which may be communicatively coupled to the controller.

In a non-limiting example, the components of the elevator system, which may include the controller 206, the stationary quay detector 208, and the water level detector 210, may reside in various locations relative to the relocatable quay. In some non-limiting examples, a processor of the controller 206 may be communicatively coupled to a memory of the controller 206 by a bus. The processor can include one processor or multiple processors. Non-limiting examples of the processor include a Field-Programmable Gate Array (FPGA), an application specific integrated circuit (ASIC), a microprocessor, or any combination of these. Instructions executable by the processor may be stored in the memory, along with other information such as information detected by the stationary quay detector 208 or the water level detector 210 or other parameters.

In a non-limiting example, the instructions are executable by the processor for causing the processor to perform various operations, such as raising and lowering the floating wind turbine platform. In some examples, the instructions can include, but are not limited to including, processor specific instructions generated by a compiler or an interpreter from code written in any suitable computer-programming language, such as C, C++, C#, Java, or Python. Through the instructions, the processor may, in some non-limiting examples, operate to adjust an elevation of a surface of a relocatable quay.

The memory of the controller can include one memory device or multiple memory devices. In a non-limiting example, the memory can be non-volatile and may include any type of memory device that retains stored information when powered off. Non-limiting examples of the memory include electrically erasable and programmable read-only memory (EEPROM), flash memory, or any other type of non-volatile memory. At least some of the memory device can include, but is not limited to including, a non-transitory computer-readable medium from which the processor can read the instructions. In a non-limiting example, a non-transitory computer-readable medium can include electronic, optical, magnetic, or other storage devices capable of providing the processor with the instructions or other program code. Non-limiting examples of a non-transitory computer-readable medium include magnetic disk(s), memory chip(s), ROM, random-access memory (RAM), an ASIC, a configured processor, optical storage, or any other medium from which a computer processor can read the instructions .

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A relocatable quay comprising:
a deck relocatable in a body of water adjacent a stationary quay to receive a floating unit from the stationary quay; and
an elevator system positionable to raise and lower the deck to receive the floating unit from the stationary quay and to deploy the floating unit into the body of water;
optionally, further comprising:
towing equipment positionable to engage a towline such that the relocatable quay is movable to an additional location of the stationary quay.

2. The relocatable quay of claim 1, wherein the floating unit comprises one or more floating columns of a floating wind turbine.

3. The relocatable quay of claim 1, wherein the elevator system is further positionable to raise and lower the deck to receive the floating unit from the body of water and to deploy the floating unit onto the stationary quay.

4. The relocatable quay of claim 1, wherein the elevator system further comprises:
an elevator control system comprising:
a stationary quay detector positionable to detect an elevation of a surface of the stationary quay;
a water level detector positionable to detect a water level of a water surface of the body of water; and
a controller positionable to control raising or lowering the deck using the elevation of the surface of the stationary quay and the water level of the water surface of the body of water.

5. The relocatable quay of claim 4, wherein the elevator system further comprises:
at least one ballast compartment positionable to intake water from the body of water to lower the deck and to eject water into the body of water to raise the deck, wherein the controller controls the intake of the water and the ejection of the water at the at least one ballast compartment.

6. The relocatable quay of claim 4, wherein the elevator system further comprises:
a jack-up system positionable to raise and lower the deck, wherein the controller controls the jack-up system to raise and lower the deck.

7. The relocatable quay of claim 1, wherein the elevator system further comprises:
at least one ballast compartment positionable to intake water from the body of water to lower the deck and to eject water into the body of water to raise the deck; and/or
a jack-up system positionable to raise and lower the deck, wherein a base of the jack-up system is deployable to engage a floor of the body of water when positioned at the stationary quay.

8. The relocatable quay of claim 1, further comprising:
a set of skid beams or rails positionable on the deck to communicate with a corresponding set of skid beams or rails of the stationary quay to receive the floating unit at the deck.

9. The relocatable quay of claim 1, wherein the elevator system is positionable to lower the deck to a position within the body of water to generate separation between the deck and the floating unit.

10. A method comprising:
deploying a relocatable quay through a body of water to a stationary quay;
positioning a deck of the relocatable quay at an elevation of a surface of the stationary quay;
receiving a floating unit at the deck of the relocatable quay from the stationary quay; and
lowering at least a portion of the relocatable quay, the floating unit, or both into the body of water to generate separation between the floating unit and the deck of the relocatable quay;
optionally, wherein lowering the relocatable quay comprises:
filling at least one ballast compartment of the relocatable quay with water from the body of water to lower the deck into the body of water; or wherein lowering the relocatable quay comprises:
lowering a jack-up system to lower the deck into the body of water.

11. The method of claim 10, wherein positioning the deck of the relocatable quay at the elevation of the surface of the stationary quay comprises:
detecting the elevation of the surface of the stationary quay with a stationary quay detector; and
raising or lowering the deck of the relocatable quay to the elevation of the surface of the stationary quay.

12. The method of claim 10, wherein lowering the relocatable quay into the body of water to generate separation between the floating unit and the deck of the relocatable quay comprises:
detecting a water level of a water surface of the body of water with a water level detector; and
lowering the deck of the relocatable quay to a position sufficiently below the water level of the water surface of the body of water to generate the separation between the floating unit and the deck of the relocatable quay.

13. A system comprising:
a deck movably positionable in a body of water adjacent a stationary quay to receive a floating unit;
an elevator system positionable to raise and lower the deck to receive the floating unit and to deploy the floating unit into the body of water; and
a controller communicatively coupled to the elevator system, the controller positionable to control the elevator system to raise or lower the deck to receive the floating unit and to lower the deck to deploy the floating unit;
optionally, wherein the elevator system comprises:
at least one ballast compartment positionable to intake water from the body of water to lower the deck and to eject water into the body of water to raise the deck, wherein the controller controls the intake of the water and the ejection of the water at the at least one ballast compartment.

14. The system of claim 13, wherein the elevator system comprises:
a jack-up system positionable to raise and lower the deck, wherein the controller controls the jack-up system to raise and lower the deck, and wherein a base of the jack-up system is deployable to engage a floor of the body of water when the deck is positioned at the stationary quay;
optionally, wherein the jack-up system raises and lowers the deck using winches, strand jacks, an elevator table, or a combination thereof.

15. A system comprising:
a relocatable quay according to any one of claims 1 to 9; and
a controller communicatively coupled to the elevator system, the controller positionable to control the elevator system to raise or lower the deck to receive the floating unit and to lower the deck to deploy the floating unit;
optionally, wherein the elevator system comprises:
at least one ballast compartment positionable to intake water from the body of water to lower the deck and to eject water into the body of water to raise the deck, wherein the controller controls the intake of the water and the ejection of the water at the at least one ballast compartment.
